# NEUE EUROPÄISCHE PATENTSCHRIFT

(11) **EP 3 682 841 B2**
(45) Veröffentlichungstag und Bekanntmachung des Hinweises auf die Entscheidung über den Einspruch: **11.09.2024**
(45) Hinweis auf die Patenterteilung: 13.10.2021
(21) Anmeldenummer: 20152244.8
(22) Anmeldetag: 16.01.2020
(51) Int. Cl.: A61C 5/42

(54) **DENTALES WURZELKANALINSTRUMENT**
DENTAL ROOT CANAL INSTRUMENT
INSTRUMENT DE CANAL RADICULAIRE DENTAIRE

(30) Priorität: 17.01.2019 DE 102019101174
(43) Veröffentlichungstag der Anmeldung: 22.07.2020
(73) Patentinhaber: Gebr. Brasseler GmbH & Co. KG, 32657 Lemgo (DE)
(72) Erfinder: CAKIR, Ömer, 32657 Lemgo (DE); ABRAMS, Ernst, 32657 Lemgo (DE)
(74) Vertreter: Hoefer & Partner Patentanwälte mbB

(56) Entgegenhaltungen:
- EP-A2- 1 354 566
- WO-A1-99/43469
- DE-U1- 202012 012 526
- DE-U1- 202019 100 258

## Beschreibung

Die vorliegende Erfindung betrifft ein dentales Wurzelkanalinstrument zur Behandlung eines Wurzelkanals eines Zahns.

Wurzelkanalinstrumente sind aus dem Stand der Technik beispielsweise aus der DE 202012012526 U1 bekannt. Wurzelkanalinstrumente müssen dabei eine gewisse Flexibilität aufweisen, um den Bögen und Windungen des Wurzelkanals folgen zu können, um eine entsprechende Wurzelkanalbehandlung durchführen zu können. Insbesondere Backenzähne können hierbei ein relativ kompliziertes Wurzelkanalsystem aufweisen, bei dem das Wurzelkanalinstrument auch kleinen Radien des Wurzelkanals folgen muss. Hierdurch muss eine ausreichende Flexibilität des Wurzelkanalinstruments gewährleistet sein. Daher weisen Wurzelkanalinstrumente ausgehend von einer Spitze des Wurzelkanalinstruments eine Seele, d.h. einen Vollmaterial-Kern, auf, welcher sich kontinuierlich in Richtung zu einem Schaftbereich des Wurzelkanalinstruments konisch erweitert. Dabei weist die Seele des Wurzelkanalinstruments an der Spitze einen sehr kleinen Durchmesser im Querschnitt auf, welcher sich kontinuierlich erweitert. Eine Steigung der Seele verläuft dabei über die gesamte Länge des Schaftbereichs parallel zu einer Steigung einer äußeren Hüllkurve der Schneiden des Schneidenbereichs. Weiterhin zeigt die DE 20 2012 012526 U1 und die WO 99/43469 A1 ein Wurzelkanalinstrument gemäß dem Oberbegriff des Anspruchs 1.

Es ist daher Aufgabe der vorliegenden Erfindung, ein dentales Wurzelkanalinstrument bereitzustellen, welches bei einfachem Aufbau und einfacher, kostengünstiger Herstellbarkeit eine verbesserte Flexibilität aufweist und insbesondere auch starken Windungen eines Wurzelkanals eines Zahns folgen kann.

Diese Aufgabe wird durch ein dentales Wurzelkanalinstrument mit den Merkmalen des Anspruchs 1 gelöst. Die Unteransprüche zeigen bevorzugte Weiterbildungen der Erfindung.

Das erfindungsgemäße dentale Wurzelkanalinstrument mit den Merkmalen des Anspruchs 1 weist den Vorteil auf, dass das Wurzelkanalinstrument eine exzellente Flexibilität aufweist. Dadurch kann bei der Behandlung eines Wurzelkanals den Bögen und Windungen des Wurzelkanals mit dem erfindungsgemäßen Wurzelkanalinstrument hervorragend gefolgt werden. Somit kann abgestorbenes oder infiziertes Pulpagewebe aus dem Wurzelkanal mit hoher Sicherheit vollständig entfernt werden. Dadurch gelingt eine weitestgehende Eliminierung von Mikroorganismen, welche sich im Wurzelkanal befinden. Weiterhin kann eine Präparation des Wurzelkanals in konischer Weise erfolgen, wobei die engste Stelle am apikalen Endpunkt des Wurzelkanals liegt. Dies wird erfindungsgemäß dadurch erreicht, dass das Wurzelkanalinstrument einen Schaftbereich und einen Schneidenbereich mit wenigstens einer Schneide und einer Seele aufweist. Die Seele (Vollmaterial-Kern) des Wurzelkanalinstruments ist dabei der Bereich im Inneren des Wurzelkanalinstruments, um welchen Schneiden und Spanaufnahmenuten des Wurzelkanalinstruments herum geführt sind. Eine Hüllkurve der Schneiden verläuft ausgehend von einer Spitze bis zum

Schaftbereich mit einer ersten konstanten Steigung mit einem ersten Winkel α in einer sich konisch erweiternden Weise. Weiterhin weist die Seele des Schneidenbereichs wenigstens einen Seelenbereich auf, welcher in Richtung zum Schaftbereich des Wurzelkanalinstruments eine zweite Steigung, die kleiner ist als die erste Steigung, aufweist. Somit ist zumindest an einem Teilbereich, vorzugsweise an der vollständigen Seele, die zweite Steigung der Seele kleiner als die erste Steigung der Hüllkurve der Schneiden. Üblicherweise weisen Wurzelkanalinstrumente Seelen auf, welche sich in Richtung zum Schaftbereich konisch mit gleicher Steigung wie die Hüllkurve der Schneiden erweitern. Somit geht die vorliegende Erfindung einen vollständig anderen Weg als der Stand der Technik. Durch die sich in Richtung des Schaftbereichs mit geringer Steigung erweiternden Seele wird erreicht, dass das Wurzelkanalinstrument eine höhere Flexibilität, insbesondere an dem Teil des Schneidenbereichs, welcher näher in Richtung zum Schaftbereich liegt, aufweist.

Gemäß der Erfindung steigt die Seele in Richtung zum Schaftbereich stufenweise an. Hierbei können eine oder mehrere Stufen vorgesehen werden, wobei die Steigungen an den jeweiligen Stufenbereichen immer kleiner sind wie die Steigung der Hüllkurve der Schneiden. Gemäß einer bevorzugten alternativen Ausgestaltung der Erfindung erweitert sich die Seele an einem ersten konischen Bereich von der Spitze zu einem ersten Punkt P1, der von der Spitze in Richtung zum Schaftbereich beabstandet ist, in Richtung zum Schaftbereich konisch mit der zweiten Steigung. Vom ersten Punkt P1 zum Schaftbereich ist ein zweiter konischer Bereich mit einer Steigung mit einem dritten Winkel γ vorgesehen, wobei der dritte Winkel γ kleiner ist als der zweite Winkel β. Somit weist die Seele ausgehend von der Spitze in Richtung zum Schaftbereich zwei unterschiedliche Steigungen auf, wodurch ein Grad der Flexibilität des Wurzelkanalinstruments eingestellt werden kann.

Besonders bevorzugt ist ein Übergang zwischen den stufenweise ansteigenden Bereichen der Seele kantenfrei. Hierdurch wird ein kontinuierlicher Übergang zwischen den stufenweise ansteigenden Seelenbereichen erhalten.

Vorzugsweise nimmt die Steigung der Seele von der Spitze bis zum Schaftbereich mindestens 75%, bevorzugt mindestens 90% ab. Beispielsweise beträgt die Steigung der Seele an der Spitze 1° und am Übergang zum Schaftbereich 0,1°, so dass sich die Steigung der Seele um 90% reduziert.

Ein axialer Abstand zwischen der Spitze und dem Punkt P1, ab welchem sich die Steigung der Seele des Wurzelkanalinstruments reduziert, liegt vorzugsweise in einem Bereich von 10% bis 30% einer axialen Gesamtlänge L des Schneidenbereichs und beträgt besonders bevorzugt 20% der Gesamtlänge L des Schneidenbereichs.

Vorzugsweise liegt der erste Winkel α der ersten Steigung der Hüllkurve der Schneiden in einem Bereich von 0,1° ≤ α ≤ 2° und insbesondere in einem Bereich von 0,5° ≤ α ≤ 1,1° liegt. Entsprechend kleiner ist dann der zweite Winkel β der zweiten Steigung der Seele. Vorzugsweise weist der zweite konische Bereich der Seele eine zweite Länge und eine Axialrichtung des Wurzelkanalinstruments auf, welche gleich oder größer 50% der Gesamtlänge des Schneidenbereichs ist.

Weiter bevorzugt umfasst das Wurzelkanalinstrument einen Schneidenbereich mit genau zwei Schneiden. Alternativ sind genau drei oder genau vier Schneiden vorgesehen. Besonders bevorzugt sind die Schneiden im Querschnitt S-förmig.

Vorzugsweise sind zwischen den Schneiden des Schneidenbereichs des Wurzelkanalinstruments Spannuten vorgesehen, deren Nuttiefe sich ausgehend von der Spitze des Wurzelkanalinstruments bis zum Schaftbereich kontinuierlich vergrößert. Hierdurch wird ein optimaler Abtransport von durch das Wurzelkanalinstrument entferntem Material im Wurzelkanal erreicht.

Weiter bevorzugt vergrößert sich auch eine Breite der Spannuten zwischen den Schneiden des Schneidenbereichs von der Spitze bis zum Schaftbereich kontinuierlich.

Nachfolgend werden bevorzugte Ausführungsbeispiele unter Bezugnahme auf die begleitende Zeichnung im Detail beschrieben., welche jedoch nicht das gekennzeichnete erfinderische Merkmal des Anspruchs 1 zeigen In der Zeichnung ist:
- Fig. 1: eine schematische, teilweise geschnittene Ansicht eines Zahns mit einem dentalen Wurzelkanalinstrument gemäß einem ersten Beispiel, welches jedoch nicht unter die Ansprüche fällt, zur Erläuterung der Erfindung,
- Fig. 2: eine schematische Seitenansicht des Wurzelkanalinstruments von Figur 1,
- Fig. 2a: eine Schnittansicht entlang der Linie A-A von Figur 2,
- Fig. 2b: eine Schnittansicht entlang der Linie B-B von Figur 2,
- Fig. 2c: eine Schnittansicht entlang der Linie C-C von Figur 2,
- Fig. 3: eine schematische Schnittansicht des Wurzelkanalinstruments von Figur 2,
- Fig. 4: eine schematische Darstellung von Steigungen der Hüllkurve der Schneiden und der Seele des Wurzelkanalinstruments des ersten Ausführungsbeispiels,
- Fig. 5: eine schematische Darstellung von Steigungen der Hüllkurve der Schneiden und einer Seele eines Wurzelkanalinstruments gemäß einem zweiten Beispiel zur Erläuterung der Erfindung, und
- Fig. 6: eine schematische Darstellung von Steigungen der Hüllkurve der Schneiden und einer Seele eines Wurzelkanalinstruments gemäß einem dritten Beispiel, welches jedoch nicht unter die Ansprüche fällt, zur Erläuterung der Erfindung.

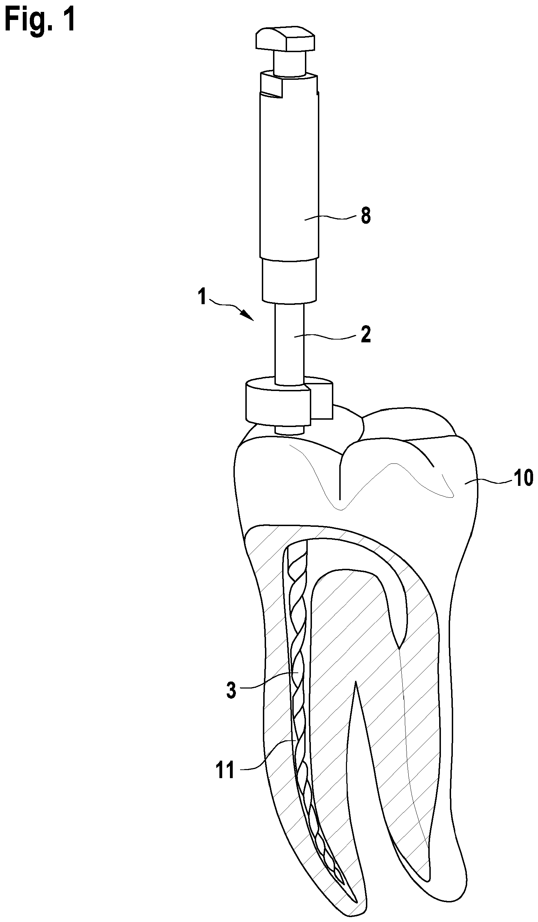

Nachfolgend wird unter Bezugnahme auf die Fig. 1 bis 4 ein dentales Wurzelkanalinstrument 1 gemäß einem ersten Beispiel, welches jedoch nicht unter die Ansprüche fällt, zur Erläuterung der Erfindung im Detail beschrieben

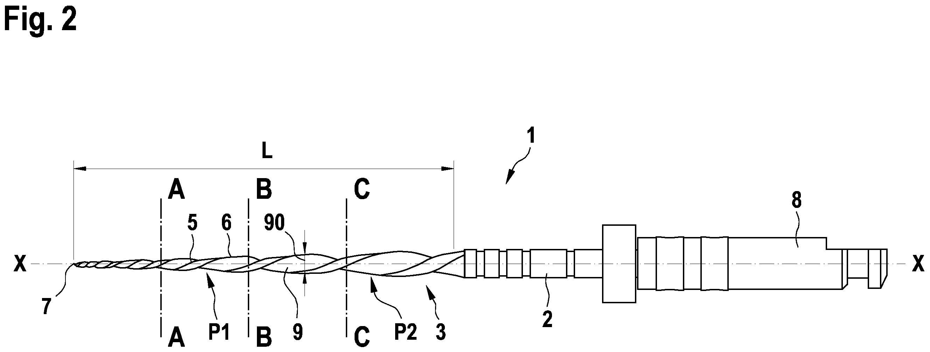

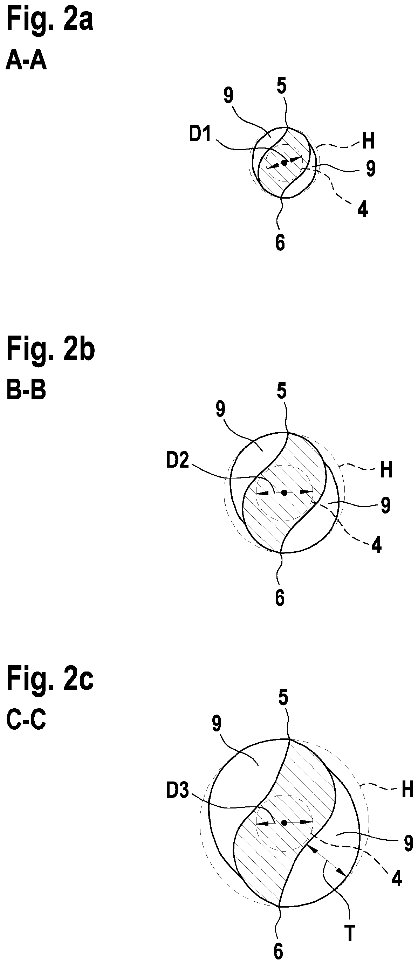

Wie aus Fig. 2 ersichtlich ist, umfasst das dentale Wurzelkanalinstrument 1 gemäß dem ersten Ausführungsbeispiel einen Schaftbereich 2, einen Schneidenbereich 3 sowie ein Anschlussstück 8. Das Anschlussstück 8 dient dabei zur Verbindung mit einem Antrieb oder auch einem Handstück, mit welchen ein Zahnarzt das Wurzelkanalinstrument bedienen kann.

Der mit Schneiden versehene Schneidenbereich 3 verläuft ausgehend von einer Spitze 7 des Wurzelkanalinstruments bis zum Schaftbereich 2.

Der Schneidenbereich 3 weist dabei in Axialrichtung X-X des Wurzelkanalinstruments eine Gesamtlänge L auf. Der Schneidenbereich 3 weist genau zwei Schneiden 5, 6 auf, welche sich spiralförmig in Längsrichtung des Wurzelkanalinstruments winden. Hierbei ergeben sich zwischen den beiden Schneiden 5, 6 Spannuten 9, welche sich ausgehend von der Spitze 7 in Richtung zum Schaftbereich 2 sowohl hinsichtlich einer Breite 90 als auch einer Tiefe T kontinuierlich erweitern. Dadurch kann ein sicherer Abtransport von entferntem Material aus dem Wurzelkanal sichergestellt werden.

Fig. 1 zeigt dabei schematisch die Verwendung des Wurzelkanalinstruments 1 in einem Zahn 10, welcher als Backenzahn dargestellt ist. Ein Wurzelkanal 11 des Zahns 10 ist dabei gebogen. Da die Wurzelkanäle individuell sehr verschieden sind, muss das Wurzelkanalinstrument 1 eine sehr gute Flexibilität aufweisen, wie schematisch in Fig. 1 gezeigt.

Der Schneidenbereich 3 weist ferner eine von der Spitze 7 bis zum Schaftbereich 2 durchgehende Seele 4 (Vollmaterial-Kern) auf. Die Seele 4 erweitert sich dabei von der Spitze 7 des Wurzelkanalinstruments konisch bis zum Schaftbereich 2. Ebenfalls erweitert sich eine Hüllkurve H der beiden Schneiden 5, 6, ausgehend von der Spitze des Wurzelkanalinstruments bis zum Schaftbereich 2 konisch.

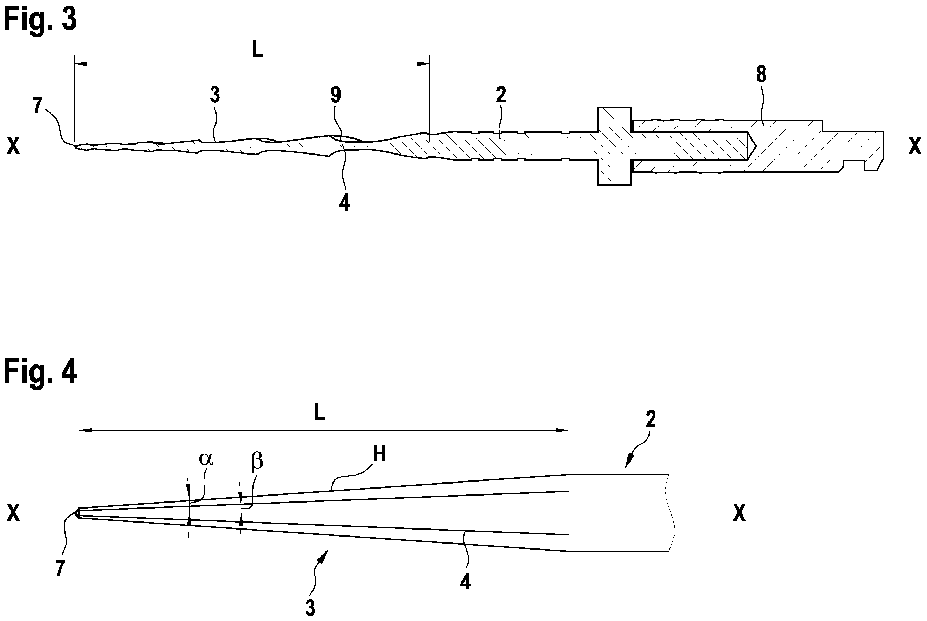

Wie in Fig. 4 gezeigt, erweitert sich die Hüllkurve H der Schneiden jedoch mit einer ersten Steigung mit einem ersten Winkel a, welcher größer ist als eine zweite Steigung mit einem zweiten Winkel β der Seele 4. Dies ist im Detail aus Fig. 4 ersichtlich.

Somit verlaufen die Hüllkurven H der Schneiden und der Seele 4 nicht mehr wie im Stand der Technik parallel und mit gleicher Steigung, sondern die Steigung der Seele 4 ist kleiner als die der Hüllkurve H der Schneiden. Dadurch ergibt sich insbesondere in dem Bereich des Schneidenbereichs 3, welcher näher zum Schaftbereich 2 liegt, eine erhöhte Flexibilität. Hierdurch kann das dentale Wurzelkanalinstrument 1 deutlich besser sehr starken Windungen und Bögen des Wurzelkanals 11 des Zahns folgen, als die bisher verwendeten Wurzelkanalinstrumente im Stand der Technik. Somit kann eine Flexibilität des Wurzelkanalinstruments im Schaftbereich 3 im Vergleich mit dem Stand der Technik deutlich erhöht werden.

Die Querschnitte der Seele 4 bzw. des Schneidenbereichs 3 sind nochmal schematisch in den Fig. 2a bis 2c dargestellt. Hierbei weist die Seele 4 am Schnitt A-A von Fig. 2a einen ersten Durchmesser D1 auf. Dieser erste Durchmesser D1 ist kleiner als ein zweiter Durchmesser D2 am Schnittpunkt B-B von Fig. 2b. Der zweite Durchmesser D2 ist kleiner als ein dritter Durchmesser D3 am Schnittpunkt C-C von Fig. 2c. Gleichzeitig vergrößert sich ein Durchmesser der äußeren Hüllkurve H der Schneiden mit der größeren ersten Steigung deutlich schneller in Richtung zum Schaftbereich 2 als die Durchmesser der Seele 4. Somit bilden die beiden Kegel der Seele 4 und der Hüllkurve H der Schneiden zwei Zylinderkegel mit gleicher Höhe, welche jedoch am Übergang zum Schaftbereich 2 unterschiedlich große Grundflächen aufweisen, da die Steigung der beiden geraden Kreiskegel unterschiedlich ist.

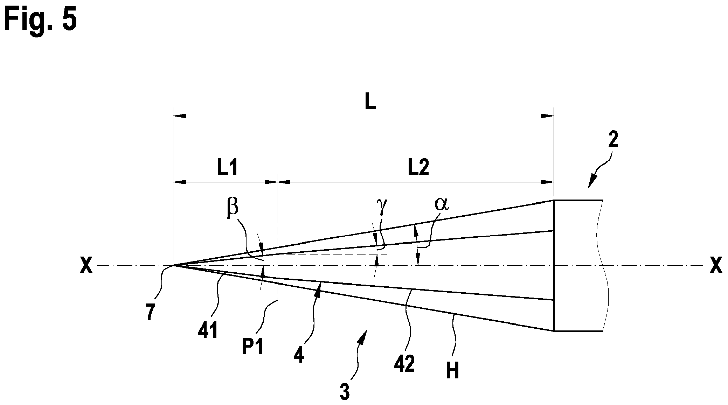

Fig. 5 zeigt schematisch den Aufbau eines Wurzelkanalinstruments gemäß einem zweiten Beispiel zur Erläuterung der vorliegenden Erfindung. Gleiche bzw. funktional gleiche Teile sind dabei mit den gleichen Bezugszeichen bezeichnet.

Das zweite Beispiel entspricht im Wesentlichen dem ersten Beispiel, wobei im Unterschied zum ersten Beispiel beim zweiten Beispiel die Seele 4 unterschiedlich ausgestaltet ist. Wie aus Fig. 5 ersichtlich ist, weist die Seele 4 einen ersten konischen Bereich 41 auf, welcher an der Spitze 7 beginnt und bis zu einem ersten Punkt P1 verläuft.

An den ersten konischen Bereich 41 schließt sich ein zweiter konischer Bereich 42 der Seele an, welcher bis zum Schaftbereich 2 verläuft. Wie in Fig. 5 dargestellt, ist hierbei eine Steigung des ersten und zweiten konischen Bereichs 41, 42 unterschiedlich. Hierbei ist der zweite Winkel β am ersten konischen Bereich 41 größer als ein dritter Winkel γ am zweiten konischen Bereich 42. Die Hüllkurve H der Schneiden 5, 6 verläuft wie im ersten Ausführungsbeispiel konisch kontinuierlich von der Spitze 7 bis zum Schaftbereich 2 mit dem ersten Winkel a. Somit ist α > β > γ.

Durch das Vorsehen von zwei unterschiedlichen Steigungen an der Seele 4 mit unterschiedlichen Winkeln β und γ kann die Flexibilität des Dentalinstruments 1 über die Gesamtlänge L variiert werden. Im in Fig. 5 gezeigten Ausführungsbeispiel verläuft der erste konische Bereich 41 über eine Länge L1 in Axialrichtung X-X des Wurzelkanalinstruments und der zweite konische Bereich 42 verläuft über eine Länge L2. Die Länge L2 ist dabei deutlich größer als die Länge L1. Durch die etwas größere Steigung mit dem zweiten Winkel β am ersten konischen Bereich 41 kann insbesondere vermieden werden, dass das Dentalinstrument im Bereich der Spitze eine zu kleine Seele mit zu kleinen Durchmessern aufweist, was eine Bruchgefahr des Dentalinstruments in diesem Bereich bewirken könnte. Durch die Wahl der Steigung mit dem zweiten Winkel β kann dies vermieden werden. Somit ist die Seele des zweiten Ausführungsbeispiels aus einem Kegelstumpf und einem Kegel zusammengesetzt, wobei vorzugsweise ein kantenfreier Übergang zwischen dem Kegel und dem Kegelstumpf vorgesehen ist. Alternativ könnten noch weitere Kegelstümpfe mit anderen Mantelwinkeln angeordnet werden. Ansonsten entspricht dieses Ausführungsbeispiel dem vorhergehenden Ausführungsbeispiel, so dass auf die dort gegebene Beschreibung verwiesen werden kann.

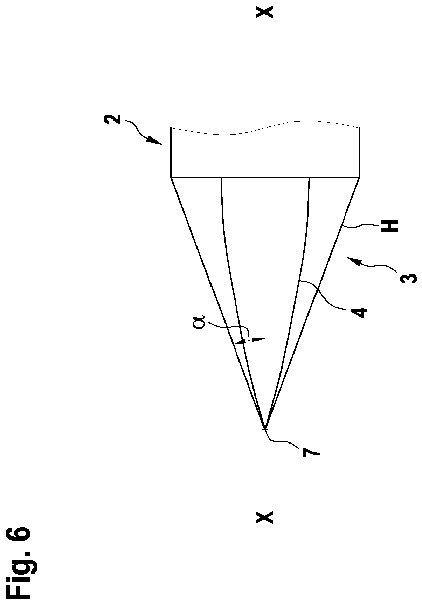

Fig. 6 zeigt eine schematische Ansicht eines Wurzelkanalinstruments gemäß einem dritten Beispiel, welches jedoch nicht unter die Ansprüche fällt, zur Erläuterung der vorliegenden Erfindung. Gleiche bzw. funktional gleiche Teile sind wieder mit den gleichen Bezugszeichen bezeichnet. Wie aus Fig. 6 ersichtlich ist, weist die Seele im dritten Beispiel, welches jedoch nicht unter die Ansprüche fällt, zur Erläuterung die Form eines Paraboloiden auf. Hierdurch ist die Hüllkurve der Seele 4 durch eine um die Mittelachse rotierte Parabel definiert. Somit nimmt die Steigung der Seele 4 ausgehend von der Spitze 7 in Richtung zum Schaftbereich 2 kontinuierlich ab, bleibt jedoch positiv. Dabei wäre es auch möglich, dass der Paraboloid in Richtung zum Schaftbereich 2 in einen Zylinder übergeht. Dadurch kann ein sehr flexibles Wurzelkanalinstrument erhalten werden. Ansonsten entspricht dieses Ausführungsbeispiel den vorhergehenden Ausführungsbeispielen, so dass auf die dort gegebene Beschreibung verwiesen werden kann.

### Bezugszeichenliste

- 1: dentales Wurzelkanalinstrument
- 2: Schaftbereich
- 3: Schneidenbereich
- 4: Seele
- 5, 6: Schneiden
- 7: Spitze
- 8: Anschlussstück
- 9: Spannut
- 10: Zahn
- 11: Wurzelkanal
- 41: erster konischer Bereich der Seele
- 42: zweiter konischer Bereich der Seele
- 90: Breite der Spannut
- D1: erster Durchmesser der Seele
- D2: zweiter Durchmesser der Seele
- D3: dritter Durchmesser der Seele
- H: Hüllkurve der Schneiden
- L: Gesamtlänge des Schneidenbereichs
- L1: erster konischer Bereich der Seele
- L2: zweiter konischer Bereich der Seele
- P1: erster Punkt
- T: Tiefe der Spannut
- X-X: Axialrichtung des Wurzelkanalinstruments
- α: Winkel der Steigung der Hüllkurve
- β: Winkel der Steigung der Seele
- γ: kleinerer Winkel der Steigung der Seele

## Patentansprüche

1. Dentales Wurzelkanalinstrument, umfassend
- einen Schaftbereich (2) und
- einen Schneidenbereich (3) mit Schneiden (5, 6) und einer Seele (4),
- wobei sich eine Hüllkurve (H) der Schneiden (5, 6) des Schneidenbereichs (3) ausgehend von einer Spitze (7) in Richtung zum Schaftbereich (2) mit einer ersten Steigung mit einem ersten Winkel (α) konisch erweitert, und
- wobei zumindest ein Bereich der Seele (4) des Schneidenbereichs (3) bis zum Schaftbereich (2) mit einer zweiten Steigung mit einem zweiten Winkel (γ) ansteigt, wobei der zweite Winkel (γ) kleiner ist als der erste Winkel (α).
- **dadurch gekennzeichnet, dass** die Seele (4) ausgehend von der Spitze (7) in Richtung zum Schaftbereich (2) stufenweise ansteigt,
- wobei die Seele (4) einen ersten konischen Bereich (42) und einen zweiten konischen Bereich (41) aufweist, wobei der zweite konische Bereich (41) eine Steigung mit einem dritten Winkel (β) aufweist, welche größer ist als die Steigung des ersten konischen Bereichs (42) mit dem zweiten Winkel (γ).

2. Wurzelkanalinstrument nach Anspruch 1, wobei ein Übergang zwischen den stufenweise ansteigenden Bereichen der Seele (4) kantenfrei ausgebildet ist.

3. Wurzelkanalinstrument nach einem der vorhergehenden Ansprüche, wobei die Steigung der Seele (4) von der Spitze (7) bis zum Schaftbereich (2) zwischen um mindestens 75% abnimmt.

4. Wurzelkanalinstrument nach einem der vorhergehenden Ansprüche, wobei der erste Winkel (α) der ersten Steigung der Hüllkurve (H) der Schneiden in einem Bereich von 0,1° ≤ α ≤ 2° liegt und insbesondere in einem Bereich von 0,5° ≤ α ≤ 1,1° liegt, und/oder wobei der dritte Winkel (β) der Steigung der Seele (4) kleiner 0,5°, insbesondere kleiner 0,2° ist.

5. Wurzelkanalinstrument nach einem der vorhergehenden Ansprüche, wobei der Schneidenbereich (3) genau zwei Schneiden oder genau drei Schneiden oder genau vier Schneiden aufweist.

6. Wurzelkanalinstrument nach einem der vorhergehenden Ansprüche, wobei zwischen den Schneiden (5, 6) Spannuten (9) vorgesehen sind, deren Nuttiefe (T) sich ausgehend von der Spitze zum Schaftbereich (2) kontinuierlich vergrößert und/oder wobei sich eine Breite (90) der Spannuten (9) von der Spitze (7) zum Schaftbereich (2) kontinuierlich vergrößert.

## Claims

1. A dental root canal instrument comprising:
- a shaft region (2) and
- a cutting region (3) having cutting edges (5, 6) and a core (4)
- wherein an envelope curve (H) of the cutting edges (5, 6) of the cutting edge region (3) conically expands from a tip (7) towards the shaft region (2) with a first slope at a first angle (α), and
- wherein at least one region of the core (4) of the cutting edge region (3) increases towards the shaft region (2) with a second slope at a second angle (γ), the second angle (γ) being smaller than the first angle (α).
- **characterized in that** the core (4) gradually increases from the tip (7) towards the shaft region (2),
wherein the core (4) has a first conical region (42) and a second conical region (41), the second conical region (41) having a slope with a third angle (β), which is smaller than the slope of the first conical region (42) with the second angle (γ).

2. The root canal instrument according to claim 1, wherein a transition between the gradually increasing regions of the core (4) is formed without edges.

3. The root canal instrument according to one of the preceding claims, wherein the slope of the core (4) decreases from the tip (7) to the shaft region (2) by at least 75%.

4. The root canal instrument according to one of the preceding claims, wherein the first angle (α) of the first slope of the envelope curve (H) of the cutting edges is in a range of 0.1° ≤ α ≤ 2° and especially in a range of 0.5° ≤ α ≤ 1.1°, and/or wherein the third angle (β) of the slope of the core (4) is less than 0.5°, especially less than 0.2°.

5. The root canal instrument according to one of the preceding claims, wherein the cutting edge region (3) has exactly two cutting edges or exactly three cutting edges or exactly four cutting edges.

6. The root canal instrument according to one of the preceding claims, wherein chip flutes (9) are provided between the cutting edges (5, 6), the flute depth (T) of, which continuously increases from the tip to the shaft region (2) and/or wherein a width (90) of the chip flutes (9) continuously increases from the tip (7) to the shaft region.

## Revendications

1. Instrument de canal radiculaire dentaire, comprenant
- une zone de manche (2) et
- une zone tranchante (3) avec des tranchants (5, 6) et une âme (4),
- dans lequel une courbe enveloppante (H) des tranchants (5, 6) de la zone tranchante (3) s'élargit de manière conique en partant d'une pointe (7) en direction de la zone de manche (2) avec une première pente avec un premier angle (α), et
- dans lequel au moins une zone de l'âme (4) de la zone tranchante (3) monte jusqu'à la zone de manche (2) avec une deuxième pente avec un deuxième angle (γ), dans lequel le deuxième angle (γ) est inférieur au premier angle (α),
- **caractérisé en ce que** l'âme (4) monte progressivement en partant de la pointe (7) en direction de la zone de manche (2),
dans lequel l'âme (4) présente une première zone conique (42) et une seconde zone conique (41), dans lequel la seconde zone conique (41) présente une pente avec un troisième angle (β), lequel est plus grand que la pente de la première zone conique (42) avec le deuxième angle (γ).

2. Instrument de canal radiculaire selon la revendication 1, dans lequel une transition entre les zones ascendantes progressivement de l'âme (4) est réalisée sans arête.

3. Instrument de canal radiculaire selon l'une quelconque des revendications précédentes, dans lequel la pente de l'âme (4) diminue de la pointe (7) vers la zone de manche (2) d'au moins 75 %.

4. Instrument de canal radiculaire selon l'une quelconque des revendications précédentes, dans lequel le premier angle (α) de la première pente de la courbe enveloppante (H) des tranchants se situe dans une plage de 0,1° ≤ α ≤ 2° et se situe en particulier dans une zone de 0,5° ≤ α ≤ 1,1°, et/ou dans lequel le troisième angle (β) de la pente de l'âme (4) est inférieur à 0,5°, en particulier est inférieur à 0,2°.

5. Instrument de canal radiculaire selon l'une quelconque des revendications précédentes, dans lequel la zone tranchante (3) présente précisément deux tranchants ou précisément trois tranchants ou précisément quatre tranchants.

6. Instrument de canal radiculaire selon l'une quelconque des revendications précédentes, dans lequel sont prévues entre les tranchants (5, 6) des goujures (9), dont la profondeur d'encoche (T) s'agrandit en continu en partant de la pointe vers la zone de manche (2) et/ou dans lequel une largeur (90) des goujures (9) augmente en continu depuis la pointe (7) vers la zone de manche (2).
